(19) Europäisches Patentamt
European Patent Office
Office européen des brevets

(11) **EP 1 427 996 B1**

(12) **EUROPÄISCHE PATENTSCHRIFT**

(45) Veröffentlichungstag und Bekanntmachung des Hinweises auf die Patenterteilung:
**17.11.2010   Patentblatt 2010/46**

(21) Anmeldenummer: **02774385.5**

(22) Anmeldetag: **19.09.2002**

(51) Int Cl.:
*G01D 5/20* (2006.01)        *G01D 3/028* (2006.01)

(86) Internationale Anmeldenummer:
**PCT/DE2002/003507**

(87) Internationale Veröffentlichungsnummer:
**WO 2003/027613 (03.04.2003 Gazette 2003/14)**

(54) **SCHALTUNG ZUR MESSUNG VON WEGSTRECKEN**

CIRCUIT FOR MEASURING DISTANCES TRAVELLED

CIRCUIT POUR MESURER DES DISTANCES PARCOURUES

(84) Benannte Vertragsstaaten:
**DE FR GB**

(30) Priorität: **19.09.2001   DE 10146287**

(43) Veröffentlichungstag der Anmeldung:
**16.06.2004   Patentblatt 2004/25**

(73) Patentinhaber: **Micro-Epsilon Messtechnik GmbH & Co. KG**
**94496 Ortenburg (DE)**

(72) Erfinder:
• **KLEINE, Ulrich**
**38350 Helmstedt (DE)**
• **ROEWER, Falk**
**39108 Magdeburg (DE)**
• **SALZWEDEL, Klaus**
**39116 Magdeburg (DE)**
• **MEDNIKOV, Felix**
**94496 Ortenburg (DE)**
• **SELLEN, Martin**
**94496 Ortenburg (DE)**

(74) Vertreter: **Naumann, Ulrich et al**
**Patentanwälte**
**Ullrich & Naumann**
**Luisenstrasse 14**
**69115 Heidelberg (DE)**

(56) Entgegenhaltungen:
**US-A- 5 589 778**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schaltung zur Messung von Wegstrecken, mit mindestens zwei Eingängen, mindestens einer Messspule und mit mindestens einer Signalquelle, wobei mittels der Signalquelle mindestens zwei Eingangssignale erzeugbar sind, wobei die Eingänge mittels der Eingangssignale ansteuerbar sind und wobei die Eingangssignale, vorzugsweise vorverarbeitet, an den Eingängen der Messspule anliegen. Die Erfindung betrifft ferner ein Verfahren zur Messung von Wegstrecken, insbesondere zum Betreiben einer Schaltung zur Messung von Wegstrecken, mit mindestens zwei Eingängen, mindestens einer Messspule und mit mindestens einer Signalquelle, wobei mittels der Signalquelle mindestens zwei Eingangssignale erzeugt werden, wobei die Eingänge mittels der Eingangssignale angesteuert sind und wobei die Eingangssignale, vorzugsweise vorverarbeitet, an den Eingänge der Messspule anliegen,

Aus der Praxis sind verschiedene Schaltungen zur Messung von Wegstrecken bekannt, lediglich beispielhaft wird hierbei auf die DE 42 25 968 A1 verwiesen. Mit der dort offenbarten Schaltung werden mittels einer Messspule Wegstrecken berührungslos gemessen. Es handelt sich hierbei um einen induktiven Wegsensor, der mit relativ niedrigen Frequenzen im Bereich von 1 kHz bis 10 kHz betrieben wird. Um die Genauigkeit der Messung zu erhöhen, ist es bei dieser Schaltung notwendig, den Temperatureinfluss auf die Messgröße zu ermitteln. Dies erfolgt bei der bekannten Schaltung mittels einer diskreten Schaltung, die den Gleichspannungsanteil einer mit Wechselspannungen angeregten Schaltung erfasst. Die Schaltung weist zwei Eingänge auf, die mit zwei von einer Signalquelle erzeugten Eingangssignalen gegenphasig angesteuert werden. Die den Eingängen nachfolgenden Operationsverstärker arbeiten mit ihren Widerständen als Spannungs-/Strom-Wandler, wobei der Strom von beiden Seiten in die Messspule eingekoppelt wird.

Im Normalbetrieb - Messbetrieb - wird die Schaltung mit zwei gegenphasigen Wechselspannungen angesteuert. Zur Bestimmung des Temperaturverhaltens wird den Wechselspannungen ein DC-Offset-Spannungssignal - Gleichspannungsanteil - überlagert. Da der eingespeiste Strom schaltungsbedingt an beiden Enden der Messspule gleich sein muss, stellen sich über den der Messspule zugeordneten Widerständen, die zudem jeweils einer Operationsverstärkerschaltung zugeordnet sind, unterschiedliche Spannungen ein, die durch den Offset der Wechselspannungen und der Messspule sowie der temperaturabhängige Anteile bedingt sind. Die temperaturabhängige Ausgangsspannung - Gleichspannung - wird mit einem weiteren Operationsverstärker bestimmt.

Wendet man das Superpositionsprinzip an, so erkennt man, dass der untere Eingang der Schaltung ein Tiefpassverhalten und der obere Eingang der Schaltung ein Bandpassverhalten aufweist. Für ideale gegenphasige Eingangssignale ist die Gesamtübertragungsfunktion somit eine Tiefpassfunktion, welche durch eine weitere Kapazität geglättet wird. Der Tiefpass entsteht durch die Differenz eines Hochpasses und eines mit ihm gematchten Verstärkungspfads.

Da der Offset in erster Näherung umgekehrt proportional zur Temperatur ist

$$U = U_= \frac{K}{R_0 \, (1 + \alpha \, T)}, \qquad\qquad\qquad (1)$$

können somit die Temperatur bestimmt und temperaturbedingte Messfehler korrigiert werden. Diese Messungen werden jedoch nur Seiten in die normalen Messungen mit den rein wechselspannungsmäßigen Eingangssignalen eingeschoben. Während der Messung mit rein wechselspannungsmäßigen Eingangssignalen kann auch ein Gleichspannungsanteil ermittelt werden, der dazu dient, die Temperaturdrift der Messspule zu erfassen und zu korrigieren.

Die bekannte Schaltung ist insbesondere dahingehend problematisch, dass die auftretenden Zeitkonstanten der Filterung sehr groß sind und die bekannte Schaltung aufgrund ihres Aufbaus verhältnismäßig groß ausgestaltet ist und deshalb nicht für einen Einsatz geeignet ist, bei dem nur ein sehr geringer Raum für die Schaltung vorhanden ist.

Aus der US 5589778A ist eine Schaltung zur Messung von Wegstrecken gemäß dem Oberbegriff des Anspruchs 1 bekannt.

Der vorliegenden Erfindung liegt daher die Aufgabe zugrunde, eine Schaltung sowie ein Verfahren zur Messung von Wegstrecken der eingangs genannten Art anzugeben, durch die/das ein Einsatz der Schaltung auch bei geringem für die Schaltung vorhandenen Raum ermöglicht wird.

Erfindungsgemäß wird die voranstehende Aufgabe durch eine Schaltung zur Messung von Wegstrecken mit den Merkmalen des Patentanspruchs 1 gelöst.

In erfindungsgemäßer Weise ist erkannt worden, dass man in Abkehr zu der bisherigen Praxis eine Miniaturisierung der bisherigen Schaltung erreichen muss, um eine Vielzahl von Einsatzmöglichkeiten der Schaltung zu ermöglichen. Dies wird dadurch erreicht, dass die Schaltung derart ausgestaltet wird, dass sie als integrierte Schaltung aufgebaut werden kann und die Integration in einen ASIC bei vergleichbarer Übertragungsfunktion der bekannten Schaltung ermöglicht wird. Dies wird durch den Einsatz eines SC-Netzwerks - Schalter-Kondensator-Netzwerks - erreicht, das ein gutes Matchingverhalten aufweist und es erlaubt, die Schaltung besonders einfach zu integrieren und somit zu miniaturisieren, wodurch die Schaltung auch bei sehr geringem Raum und somit universell einsetzbar wird und der Preis der Schaltung gering gehalten werden kann.

Die Hochpassschaltung wird hierbei durch ein äquivalentes passives doppelresistives Referenznetzwerk ersetzt, das einen Spannungsteiler und eine Induktivität umfasst, die parallel zu einem der Widerstände des Spannungsteilers geschaltet ist. Die Übertragungsfunktion dieses Filters ist die eines Hochpasses ersten Grads

$$H(p) = \frac{p R_2 L}{R_1 R_2 + p (R_1 + R_2) L} . \qquad (2)$$

Die Übertragungsfunktion weist eine Nullstelle bei p = 0 und einen Pol bei p = - $R_1$ $R_2$/($R_1$ + $R_2$) 1/L auf, wobei p die allgemeine komplexe Frequenzvariable ist.

Mittels bekannter Methoden kann nunmehr ein entsprechendes Wellenflussdiagramm erstellt werden. Ein Dreitorparalleladaptor dient dazu, die unterschiedlichen Wellenwiderstände der drei Komponenten des Referenznetzwerks aneinander anzupassen. An der linken Seite des Dreitorparalleladaptors befindet sich das Wellenflussdiagramm einer widerstandsbehafteten Spannungsquelle, in der Mitte oben das Wellenflussdiagramm der Induktivität und an der rechten Seite das Wellenflussdiagramm des Abschlusswiderstands. Da Wellenfilter zeitdiskret sind, wird anstatt der komplexen Frequenzvariable p eine neue Frequenzvariable ψ mit

$$\psi = \frac{z - 1}{z + 1} = \tanh\left(\frac{p T}{2}\right), \text{ und } z = e^{pT} \qquad (3)$$

definiert werden, wobei T =1/F die Abtastperiode und F die Abtastfrequenz ist. Für rein imaginäre Frequenzen wird p zu jω und damit zu

$$\psi = \tan\left(\frac{\omega T}{2}\right). \qquad (4)$$

Die Adaptorgleichungen lassen sich in diesem Fall wie folgt aufstellen:

$$b_3 = \sum_{v=1}^{2} \gamma_v \, a_v \qquad (5)$$

$$b_2 = b_3 - a_2 \qquad (6)$$

mit einfallenden Spannungswellen $a_i$ und ausfallenden Spannungswellen $b_i$ für i = 1, 2, 3. Die Ausgangsspannung ergibt sich nach

$$U = \frac{a + b}{2} = \frac{b_3}{2} . \qquad (7)$$

Zusätzlich ist die Invertierung des Signals im Wellenflussdiagramm der Induktivität zu realisieren.

$$b_2^* = -b_2. \hspace{3cm} (8)$$

Falls keine parasitären Ströme zugelassenen werden sollen, ist es möglich, positiv verzögert oder negativ nicht verzögert zu verstärken oder zu integrieren. Mit dieser Technik sind verschiedene Realisierungsarten von Wellen-Schalter-Kondensator-Filtern - SC-Filter - bekannt.

Im Rahmen einer besonders guten Bestimmung des Temperatureinflusses könnten mindestens zwei Eingangssignale im Wesentlichen unipolar und/oder gegenphasig sein. Vorzugsweise handelt es sich bei den Eingangssignalen im Wesentlichen um Rechteckspannungen, da dann gegenphasige Eingangssignale besonders einfach erzeugbar sind.

Zur Reduktion von niederen Frequenzen in den Eingangssignalen könnten die Eingangssignale mittels zumindest eines Filters proportional und/oder mittels eines Hochpasses filterbar sein.

Im Hinblick auf eine besonders einfache Ausgestaltung könnte das SC-Netzwerk mindestens einen SC-Verstärker aufweist. Dies würde einen besonders einfachen Aufbau der Schaltung erlaubten.

In einer weiter vorteilhaften Ausgestaltung könnte ein erster SC-Verstärker als positiver verzögerter SC-Verstärker realisiert sein und/oder zwei Eingänge mit je einem Faktor multiplizieren. Bei einer Realisierung des SC-Verstärkers als positiver verzögerter SC-Verstärker könnten so parasitären Ströme vermindert werden.

Zur weiteren Vermeidung von parasitären Strömen könnte ein zweiter SC-Verstärker als positiver verzögerter SC-Verstärker realisiert sein und/oder mindestens eines der Eingangssignale, vorzugsweise nicht verstärkt, um eine Halbperiode der Taktfrequenz verzögern.

Das SC-Netzwerk könnte mindestens einen SC-Integrator aufweisen. Im Hinblick auf die Vermeidung von parasitären Strömen könnte der SC-Integrator als negativer nicht verzögerter SC-Integrator realisiert sein und/oder eine Verstärkung von Eins aufweisen und/oder verlustbehaftet sein.

In besonders einfacher Weise könnte der Ausgangs des SC-Integrators an einem zweiten Eingang des ersten SC-Verstärkers anliegen.

In Hinblick auf eine besonders einfache Bestimmung des Temperatureinflusses könnten mittels eines SC-Addierers die Ausgänge des ersten SC-Verstärkers und des zweiten SC-Verstärkers addierbar sein. Somit könnte am Ausgang des SC-Addierers ein temperaturabhängiges Ausgangssignal abgegriffen werden, das zur Kompensation des Temperatureinflusses verwendet werden könnte.

Der Ausgang des ersten SC-Verstärkers könnte an den Eingängen des SC-Integrators und/oder des SC-Addierers anliegen. Zusätzlich oder alternativ könnte der Ausgang des zweiten SC-Verstärkers an einem zweiten Eingang des SC-Addierers anliegen.

Ferner könnte das SC-Netzwerk auch mindestens einen SC-Verstärker und/oder mindestens einen SC-Integrator und/oder mindestens einen SC-Addierer aufweisen.

Zur Vermeidung von parasitären Strömen könnte der erste und/oder der zweite SC-Verstärker und/oder der SC-Addierer negativ nicht verzögert realisiert sein. Zusätzlich oder alternativ könnte der SC-Integrator positiv verzögert realisiert sein. Das Ausgangssignal könnte somit invertiert werden.

Im Rahmen einer vorteilhaften Ausgestaltung könnte das SC-Netzwerk mindestens einen SC-Verstärker und/oder mindestens einen SC-Integrator und/oder mindestens einen SC-Differenzverstärker aufweisen.

In weiter vorteilhafter Weise könnte mindestens eines der vorzugsweise mit einem Faktor multiplizierten Eingangssignale im SC-Integrator speicherbar sein. Ein weiterer Faktor könnte von einer Kapazität des SC-Integrators jeweils vom Ergebnis in jeder Taktperiode wieder löschbar sein.

In vorteilhafter Weise könnte ein SC-Verstärker als positiver verzögerter SC-Verstärker realisiert sein und/oder mindestens eines der Eingangssignale nicht verstärkt und/oder um eine Halbperiode der Taktfrequenz verzögern.

Zur Ermittlung des Temperatureinflusses könnte der Ausgang des SC-Verstärkers und des SC-Integrators mittels eines SC-Differenzverstärkers subtrahierbar sein und/oder um eine Halbperiode der Taktfrequenz verzögerbar sein.

In besonders einfacher Weise könnte der Ausgang des SC-Verstärkers am zweiten Eingang des SC-Integrators anliegen. Das Ausgangssignal könnte somit eine Verzögerung von einer Taktperiode aufweisen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der erfindungsgemäßen Schaltung und des erfindungsgemäßen Verfahrens zur Messung von Wegstrecken anhand der Zeichnung zu verweisen. In Verbindung mit der Erläuterung der bevorzugten Ausführungsbeispiele der erfindungsgemäßen Schaltung und des erfindungsgemäßen Verfahrens anhand der Zeichnung werden auch im Allgemeinen bevorzugte Ausgestaltungen und Weiterbildungen der Lehre erläutert. In der Zeichnung zeigt

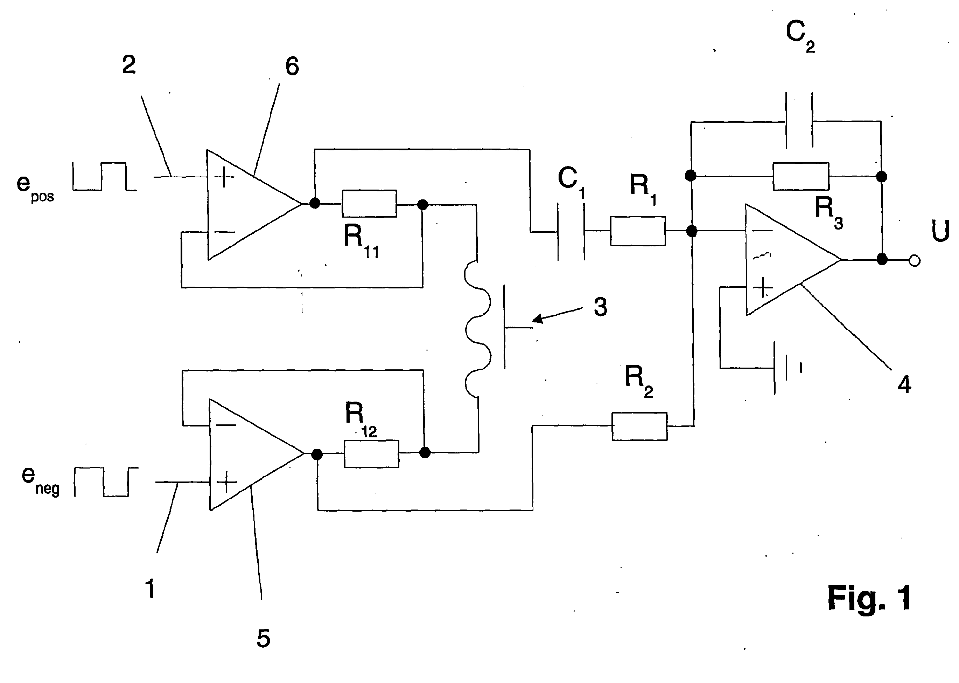

Fig. 1    in einer schematischen Darstellung, eine bekannte Schaltung zur Bestimmung des Temperatureinflusses,

Fig. 2    in einer grafischen Darstellung, Signale zum Betreiben der bekann- ten Schaltung,

Fig. 3    in einer schematischen Darstellung, ein passives doppelresistives Referenznetzwerk einer Hochpassschaltung,

Fig.4    in einer schematischen Darstellung, ein Wellenflussdiagramm der Hochpassschaltung der Fig.3,

Fig. 5    in einer schematischen Darstellung, eine SC-Realisierung einer Hochpassschaltung,

Fig. 6    die Übertragungsfunktion der Hochpassschaltung der Fig. 5,

Fig. 7    in einer schematischen Darstellung, ein Ausführungsbeispiel einer erfindungsgemäßen Schaltung,

Fig. 8    die Übertragungsfunktion der in Fig. 7 gezeigten Schaltung,

Fig.9    in einer schematischen Darstellung, ein weiteres Ausführungsbei- spiel einer erfindungsgemäßen Schaltung und

Fig. 10    die Übertragungsfunktion der in Fig. 9 gezeigten Schaltung.

Die bekannte Schaltung zur Messung von Wegstrecken ist als diskrete Schaltung ausgestaltet und weist zwei Eingänge 1, 2 sowie eine Messspule 3 auf. Mittels einer - hier nicht dargestellten - Signalquelle sind zwei Eingangssignale $e_{pos}$ und $e_{neg}$ erzeugbar. Die Eingänge 1, 2 werden hierbei mittels der Eingangssignale $e_{pos}$ und $e_{neg}$ angesteuert, wobei die Eingangssignale $e_{pos}$ und $e_{neg}$ vorverarbeitet an den Eingängen 1, 2 der Messspule 3 anliegen.

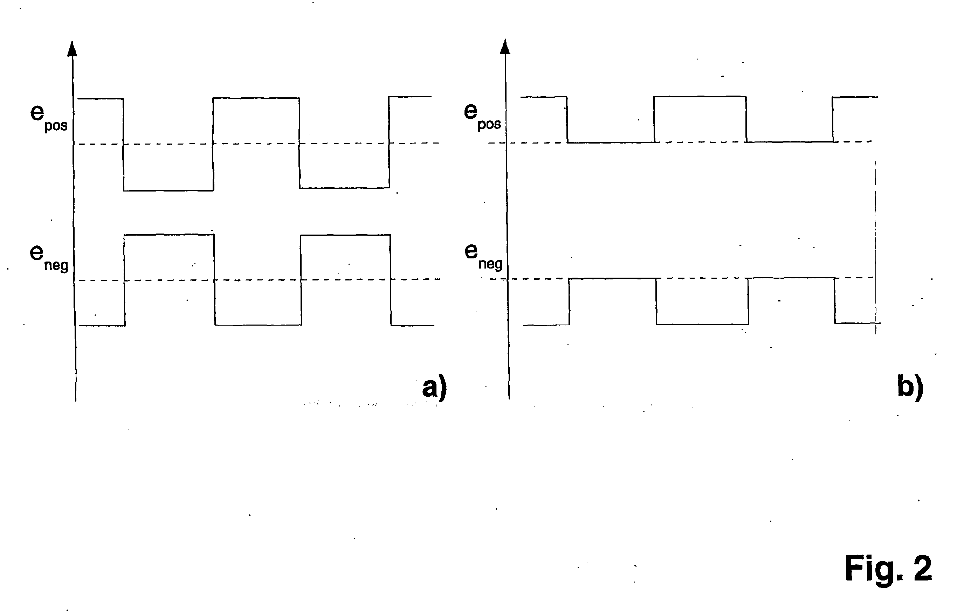

Die bekannte wechselspannungsmäßig angeregten Schaltung ermöglicht hierbei die messtechnische Erfassung eines Gleichspannungsanteils, der proportional zur Temperatur ist. Die den Eingängen 1, 2 nachfolgenden Operationsverstärker bilden mit ihren Widerständen einen Spannungs-/Stromwandler. Der Strom wird von beiden Seiten in die Messspule 3 eingekoppelt. Im Normalbetrieb, d. h. im Messbetrieb, werden die in Fig. 2a dargestellten wechsel- spannungsmäßigen Eingangssignale $e_{pos}$ und $e_{neg}$ zur Ansteuerung der Eingänge benutzt. Zur Bestimmung des linear abhängigen Temperaturverhaltens der Schaltung und der Messspule 3 werden hingegen die in Fig. 2b gezeigten Ein- gangssignale $e_{pos}$ und $e_{neg}$ verwendet.

Aus Fig. 2b ist sehr gut ersichtlich, dass diese Eingangssignale $e_{pos}$ und $e_{neg}$ Wechselspannungen entsprechen, die mit einer Gleichspannung überlagert sind. Da der eingespeiste Strom schaltungsbedingt an beiden Messspulenenden gleich sein muss, wird sich über den Widerständen $R_{11}$ und $R_{12}$ aufgrund des Offsets der Eingangssignale $e_{pos}$ und $e_{neg}$ und der Messspule 3 sowie der temperaturbedingten Anteile eine unterschiedliche Spannung einstellen. Aus dieser Spannung wird mittels eines Operationsverstärkers 4 eine temperaturabhängige Ausgangsspannung U - Gleichspannung - bestimmt.

Wendet man das Superpositionsprinzip an, so erkennt man, dass der dem Eingang 1 zugeordnete Operationsverstärker 5 in Verbindung den Widerständen $R_2$, $R_3$ und der Kapazität $C_2$ ein Tiefpassverhalten aufweist und der dem Eingang 2 zugeordnete Operationsverstärker 6 in Verbindung mit den Widerständen $R_1$, $R_3$ und den Kapazitäten $C_1$ und $C_2$ ein Bandpassverhalten aufweist. Für ideal gegenphasige Eingangssignale ist die Gesamtübertragungsfunktion eine Tiefpassfunktion, welche durch die Kapazität $C_2$ geglättet wird. Der Tiefpass entsteht durch die Differenz eines Hochpasses und eines mit ihm gematchten Verstärkungspfads.

Da der Offset in erster Näherung umgekehrt proportional von der Temperatur abhängig ist

$$U = U_= \frac{K}{R_0 (1 + \alpha T)}, \tag{9}$$

können somit die Temperatur bestimmt und temperaturbedingten Effekte korrigiert werden.

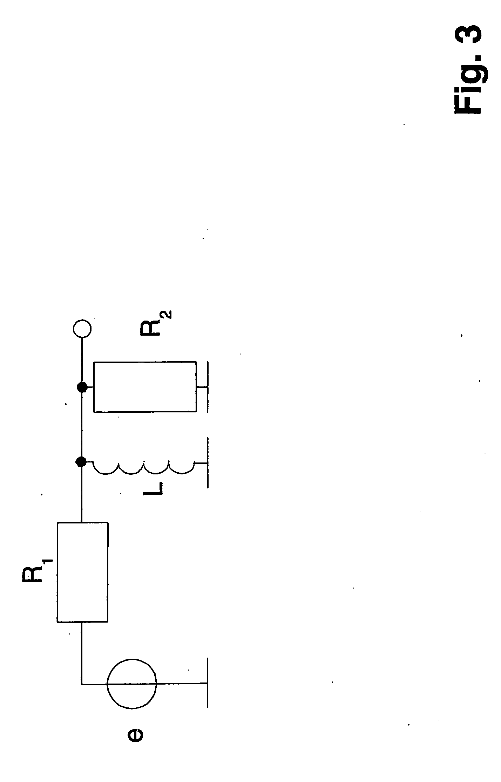

Fig. 3 zeigt ein äquivalentes passives doppelresistives Referenznetzwerk einer Hochpassschaltung. Es besteht aus einer Spannungsquelle e, einem Spannungsteiler der Widerstände $R_1$ und $R_2$ und einer parallel zum Widerstand $R_2$ geschalteten Induktivität L. Die Übertragungsfunktion dieses Filters ist die eines Hochpasses ersten Grades

$$H(p) = \frac{p\,R_2\,L}{R_1\,R_2 + p\,(R_1 + R_2)\,L} \tag{10}$$

mit einer Nullstelle bei $p = 0$ und einem Pol bei $p = -R_1, R_2/(R_1 + R_2)\,1/L$, wobei $p$ wiederum die komplexe Frequenzvariable ist.

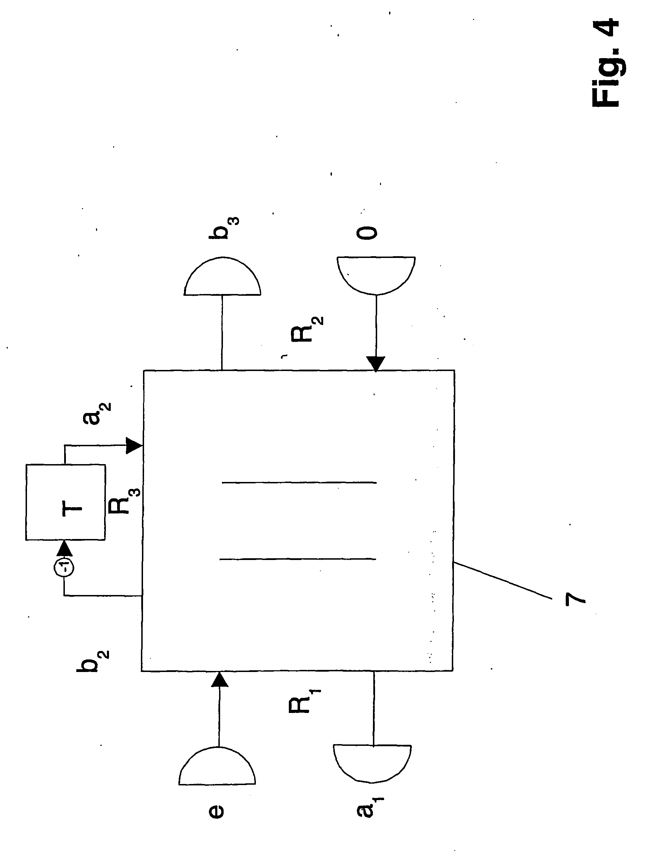

Nunmehr kann ein entsprechendes Wellenflussdiagramm erstellt werden, wie dies in Fig. 4 darstellt ist. Das Wellenflussdiagramm umfasst einen Dreitorparalleladaptor 7, in dem die unterschiedlichen Wellenwiderstände der drei Komponenten der Fig. 3 aneinander angepasst werden. An der linken Seite befindet sich das Wellenflussdiagramm der widerstandsbehafteten Spannungsquelle e, in der Mitte oben das Wellenflussdiagramm der Induktivität L und an der rechten Seite der Abschlusswiderstand $R_2$. Da Wellenfilter zeitdiskret sind, muss anstatt der komplexen Frequenzvariablen $p$ eine neue Frequenzvariable $\psi$ mit

$$\psi = \frac{z-1}{z+1} = \tanh\left(\frac{p\,T}{2}\right),\ \text{und}\ z = e^{pT} \tag{11}$$

definiert werden, wobei $T = 1/F$ die Abtastperiode und $F$ die Abtastfrequenz ist. Für rein imaginäre Frequenzen wird $p$ zu $j\omega$ und damit $\psi$ zu

$$\psi = \tan\left(\frac{\omega\,T}{2}\right). \tag{12}$$

Die zu berechnenden Adaptorgleichungen lassen sich in diesem Fall wie folgt aufstellen:

$$b_3 = \sum_{v=1}^{2} \gamma_v\,a_v \tag{13}$$

$$b_2 = b_3 - a_2 \tag{14}$$

mit den einfallenden Spannungswellen $a_i$ und den ausfallenden Spannungswellen $b_i$ für $i = 1, 2, 3$. Die Ausgangsspannung ergibt sich durch

$$U = \frac{a+b}{2} = \frac{b_3}{2}. \tag{15}$$

Zusätzlich ist die Invertierung des Signals in dem Wellenflussdiagramm der Induktivität zu realisieren.

$$b_2^{*} = -b_2. \tag{16}$$

Mit dieser Technik werden verschiedene Realisierungsarten von Wellen-Schalter-Kondensator-Filtern - SC-Filtern - beschrieben.

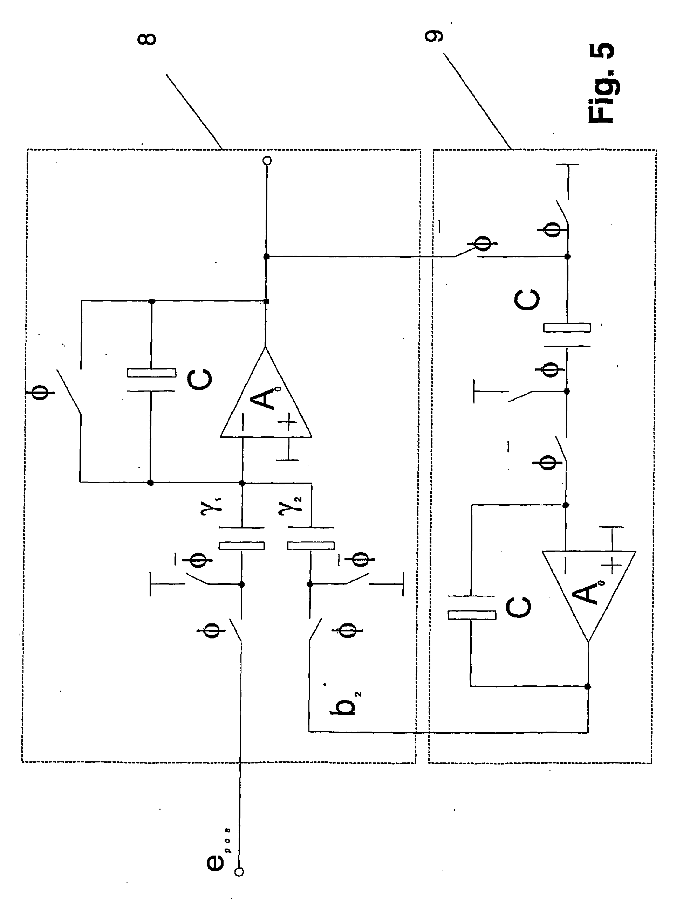

Fig. 5 zeigt eine erfindungsgemäße SC-Realisierung der Hochpassschaltung. Die Schaltung weist hierbei einen SC-Netzwerk auf, wobei ein SC-Verstärker 8 zur Nachbildung der Gleichung 13 dient. Das Eingangssignal $e_{pos}$ und das

Eingangssignal $b_2$* des SC-Verstärkers 8 werden positiv verzögert und entsprechend Gleichung 13 mit den Koeffizienten $\gamma_1$ bzw. $\gamma_2$ multipliziert. Der Ausgang des SC-Verstärkers 8 ist gleichzeitig der Ausgang der Hochpassschaltung.

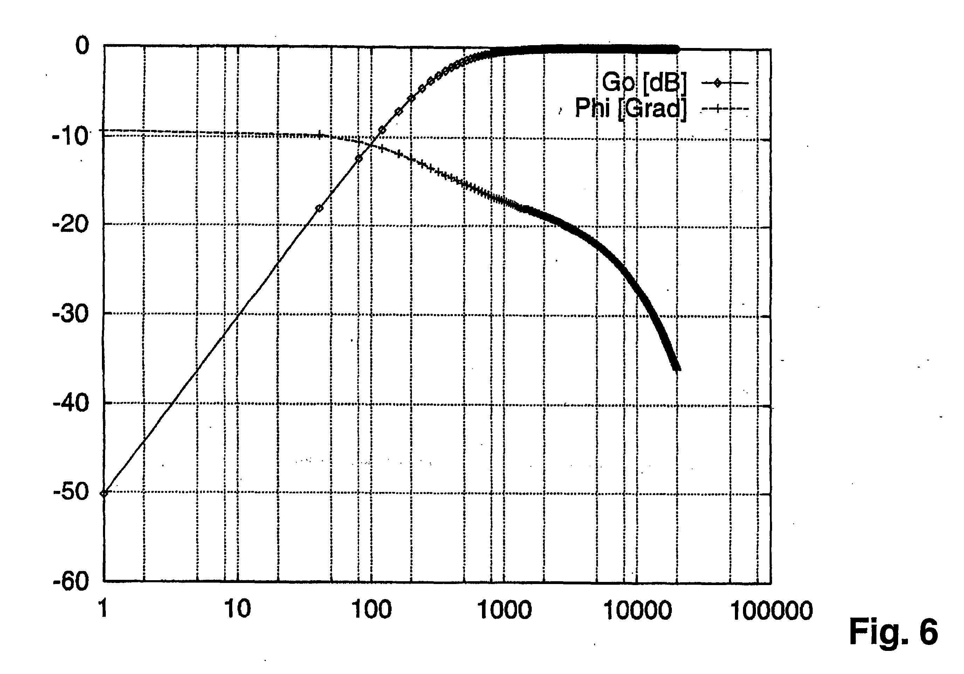

Da sich die Ausgangsspannung gemäß Gleichung 15 als arithmetischer Mittelwert aus der einfallenden und der reflektierten Spannungswelle ergibt, wird am Ausgang der 0dB-Level erreicht, weil die Division mit dem Faktor Zwei nicht durchgeführt wird. Die beiden Koeffizienten der Gleichung 13 werden als Kapazitätsverhältnisse in den Signalpfaden nachgebildet. Die Realisierung der Gleichung 13 sowie der Gleichung 15 wird durch einen nicht verzögerten negativen SC-Integrator 9 gebildet. Durch Einkopplung des Ausgangssignals des SC-Integrators 9 in den SC-Verstärker 8 in Phase $\phi$ ist die Rückkopplungsschleife geschlossen. Die Übertragungsfunktion dieser Hochpassschaltung ist in Fig. 6 gezeigt. Deutlich erkennbar ist hierbei die zeitdiskrete Hochpassfunktion der Hochpassschaltung.

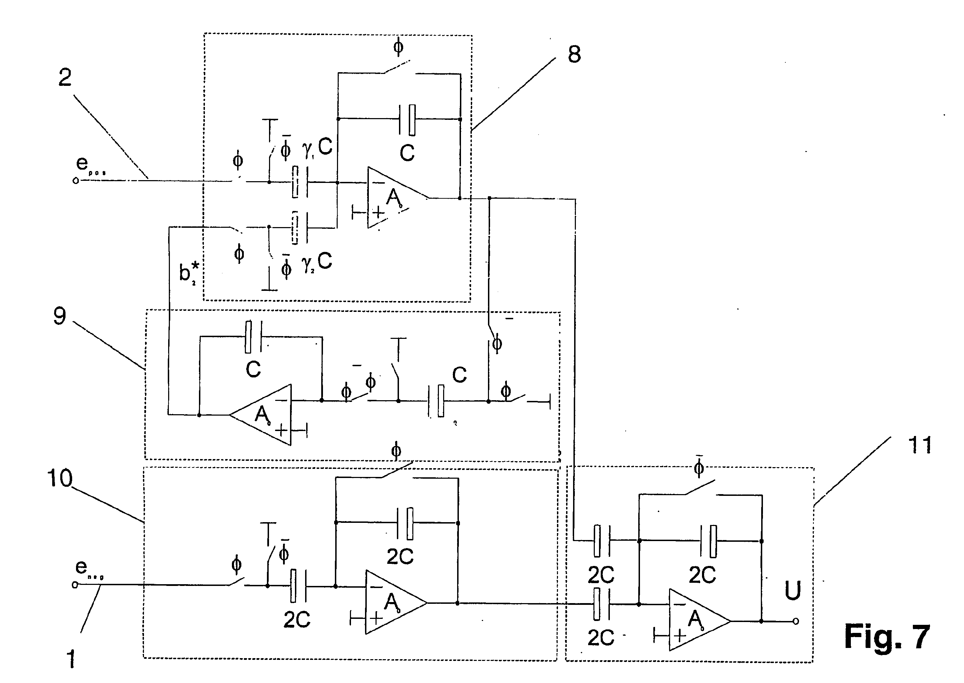

Eine erfindungsgemäße Schaltung zur Messung von Wegstrecken ist in Fig. 7 gezeigt. Die Schaltung umfasst zwei Eingänge 1, 2, eine - hier nicht dargestellte - Signalquelle sowie eine - ebenfalls nicht dargestellte - Messspule. Die Eingänge 1, 2 werden mittels zweier von der Signalquelle erzeugter Eingangssignale $e_{pos}$ und $e_{neg}$ angesteuert. Erfindungsgemäß liegen die Eingangssignale $e_{pos}$ und $e_{neg}$ an einem getakteten SC-Netzwerk an und dienen zur Erzeugung eines Messsignals und/oder eines vom Temperatureinfluss abhängigen Ausgangssignals U.

Ein Teil der Schaltung entspricht hierbei der Hochpassschaltung der Fig. 5. Die Schaltung weist zudem einen SC-Verstärker 10 auf, wobei das Eingangssignal $e_{neg}$ zum selben Zeitpunkt am Ausgang des Operationsverstärkers des SC-Verstärkers 10 anliegt wie der SC-Verstärker 8 das Ausgangssignal am Operationsverstärker liefert. Die Taktung des SC-Verstärkers 10 ist außerdem mit der Taktung des oberen SC-Verstärkers 8 identisch.

Das Eingangssignal $e_{neg}$ wird positiv um eine halbe Taktperiode verzögert zum Ausgang geschoben. Ferner weist das SC-Netzwerk einen SC-Addierer 11 auf, der zur Addition der beiden Eingangssignale, d.h. der Ausgangssignale- der SC-Verstärker 8 und 10 dient. Das SC-Netzwerk ist eine positive verzögernde SC-Schaltung, wobei diese eine Gesamtverzögerung von einer Taktperiode aufweist. Falls dieses zu hoch ist, könnten auch die Eingangsverstärker und der Ausgangsverstärker negativ nicht verzögert realisiert werden. Der SC-Integrator muss dann positiv verzögernd realisiert werden. In diesem Fall ist das Ausgangssignal invertiert.

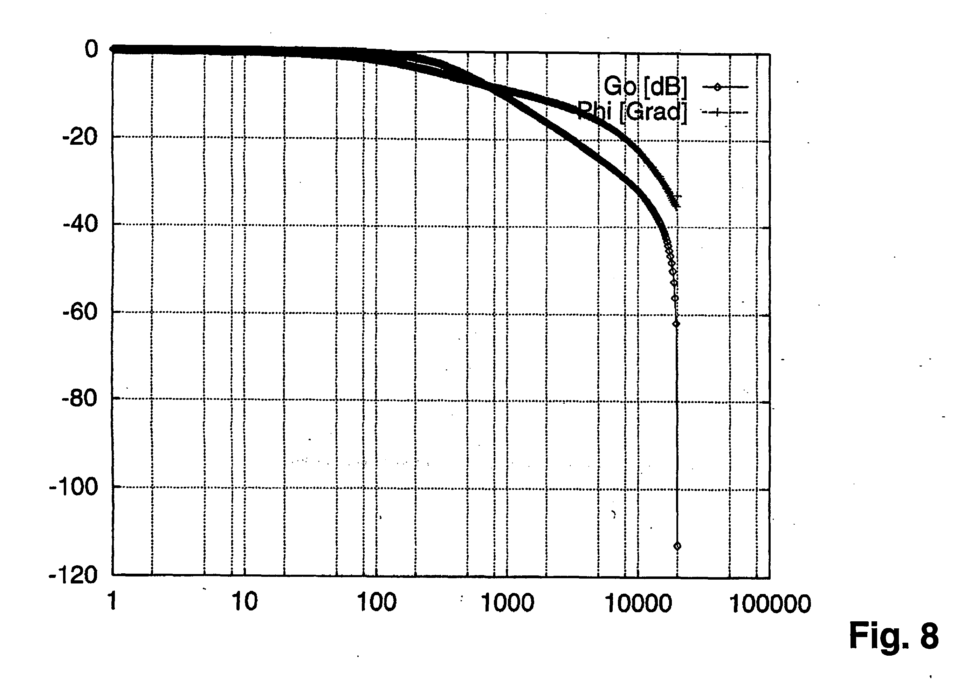

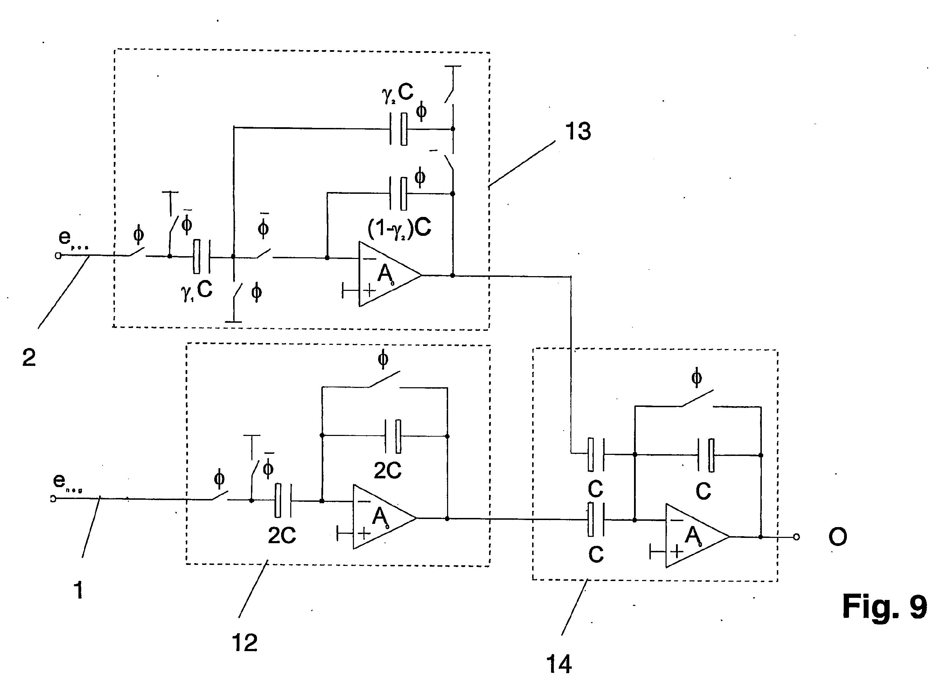

Fig. 8 zeigt die Übertragungsfunktion der Schaltung der Fig. 9. Es ist deutlich erkennbar, dass das SC-Netzwerk ein Tiefpassverhalten aufweist und insofern für die Gleichspannungsmessung sehr gut geeignet ist.

Zur Invertierung des Signals lässt sich $b_2$* wie folgt herleiten:

$$b_2^{\bullet} = a_2 - \gamma_2\, a_2 - \gamma_1\, a_1 = a_2\,(1 - \gamma_2) - \gamma_1\, a_1. \tag{17}$$

Die Ausgangsspannung des Hochpasses ist die Spannung über den Widerstand $R_2$ bzw. die Spannung über der Induktivität L, da beide Elemente parallel geschaltet sind. Im Gegensatz zu dem Widerstand $R_2$, bei dem die einfallende Welle immer gleich 0 ist, ist die Spannung der Induktivität definiert durch

$$U = \frac{a_2 + b_2}{2} = \frac{a_2 - b_2^{\bullet}}{2}. \tag{18}$$

Die Ausgangsspannung ergibt sich demnach als Differenz der einfallenden Welle $a_2$ und der negativen reflektierten Welle $b_2$ dividiert durch 2. Ohne die Division erhält man wiederum einen maximalen Pegel von 0dB, weshalb das Signal wieder zu dem Eingangssignal $e_{neg}$ addiert werden kann.

Eine Schaltung, die dies realisiert, ist in Fig. gezeigt. Die Schaltung umfasst einen positiven verzögerten SC-Verstärker 12, einen verlustbehafteten SC-Integrator 13 und einen SC-Differerenzverstärker 14. Der Faktor $(1-\gamma_2)$ lässt sich, wie in Fig. 9 zu sehen ist, durch den verlustbehafteten SC-Integrator 13 realisieren. Für den Fall, dass $\gamma_2$ kleiner als 1 ist, wird die Integratorkapazität der Größe $(1-\gamma_2)C$ eingesetzt und dazu parallel eine Kapazität der Größe $\gamma_2 C$ geschaltet, die periodisch entladen wird.

Da für die beschriebene Anwendung die Grenzfrequenz des Hochpasses immer deutlich im Frequenzbereich von 0 bis einem Viertel der Abtastfrequenz liegt, ist $\gamma_2$ immer kleiner als 1. Da der Ausgangswert am SC-Integrator 13 immer positiv sein soll, wird in der Schaltung das Eingangssignal $e_{pos}$ positiv verzögert mit $\gamma_1$ multipliziert. Die Ausgangsspannung des Hochpasses wird mittels des SC-Differenzverstärkers 14 erzeugt. Mit der Eingangskapazität für den verlustbehafteten Integrator 13 wird die Differenz $a_2 - b_2$ erzeugt. Zu diesem Zweck wird der SC-Differenzverstärkers 14 mit $\phi$ initialisiert und das Ausgangssignal U ist somit invertiert. Das zweite Eingangssignal $e_{neg}$ wird, wie bereits , bezüglich der Fig. 7 beschrieben, an den SC-Verstärker 12 angelegt und an den SC-Differenzverstärkers 14 weitergeleitet.

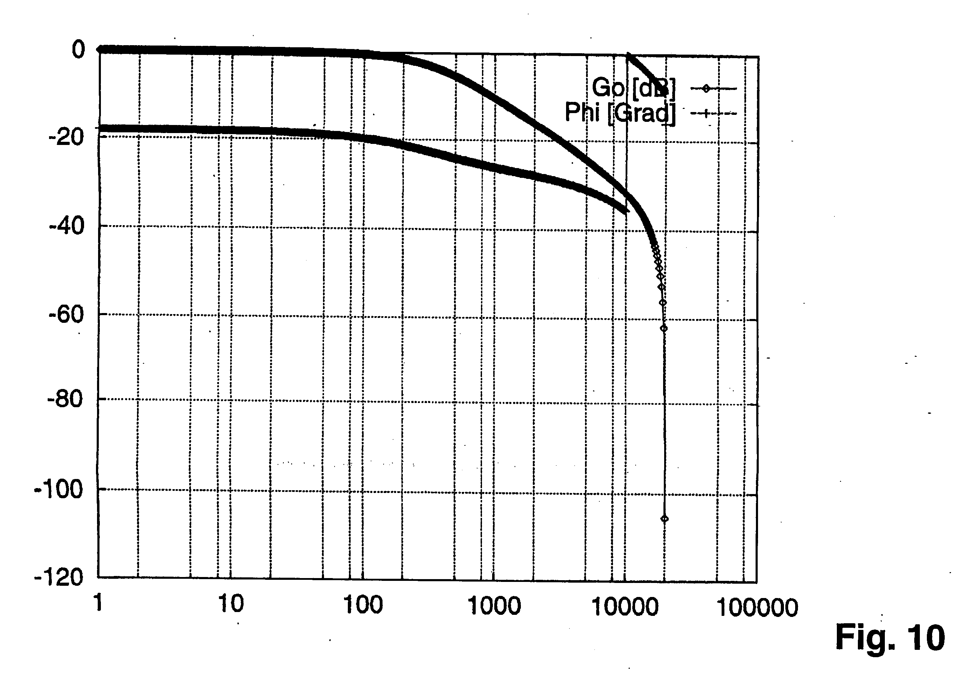

Die Übertragungsfunktion der in Fig. 9 gezeigten Schaltung ist in Fig. 10 abgebildet. Man erkennt, dass bis auf eine Phasendrehung um 180° keine Veränderung gegenüber der Übertragungsfunktion in Fig. 8 zu beobachten ist. Aufgrund der guten Matchingeigenschaften der Schaltungen ist das gemessene Gleichspannungsausgangssignal U sehr gut für eine Temperaturkorrektur geeignet.

Hinsichtlich weiterer Details wird zur Vermeidung von Wiederholungen auf die allgemeine Beschreibung verwiesen.

Schließlich sei ausdrücklich darauf hingewiesen, dass die voranstehend beschriebenen Ausführungsbeispiele lediglich zur Erörterung der beanspruchten Lehre dienen, diese jedoch in anderer Weise innerhalb des Umfangs der nachfolgenden Ansprüche ausgeführt werden.

**Patentansprüche**

1. Schaltung zur Messung von Wegstrecken, mit mindestens zwei Eingängen (1, 2), mindestens einer Messspule (3) und mit mindestens einer Signalquelle, wobei mittels der Signalquelle mindestens zwei Eingangssignale ($e_{pos}$, $e_{neg}$) erzeugbar sind, wobei die Eingänge (1, 2) mittels der Eingangssignale ($e_{pos}$, $e_{neg}$) ansteuerbar sind, wobei die Eingangssignale ($e_{pos}$, $e_{neg}$) an den Eingängen der Messspule (3) anliegen und zur Erzeugung eines Messsignals und/oder eines vom Temperatureinfluss abhängigen Ausgangssignals (U) dienen, wobei die Eingangssignale ($e_{pos}$, $e_{neg}$) an mindestens einem getakteten SC-Netzwerk anliegen , **dadurch gekennzeichnet, dass** das SC-Netzwerk mindestens drei SC-Einheiten aufweist, wobei zwei SC-Einheiten (8, 10; 13, 12) zur unterschiedlichen Bearbeitung der Eingangssignale ($e_{pos}$, $e_{neg}$) vorgesehen sind und eine SC-Einheit (11; 14) zur Verknüpfung der Ausgänge der SC-Einheiten (8, 10; 13, 12) durch Addition, Multiplikation oder sonstige Operationen vorgesehen ist.

2. Schaltung nach Anspruch 1, **dadurch gekennzeichnet, dass** die beiden Eingangssignale ($e_{pos}$, $e_{neg}$) im Wesentlichen unipolar und/oder gegenphasig sind.

3. Schaltung nach Anspruch 1 oder 2, **dadurch gekennzeichnet, dass** die Eingangssignale mittels mindestens eines Filters proportional und/oder mittels eines Hochpasses filterbar sind.

4. Schaltung nach einem der Ansprüche 1 bis 3, **dadurch gekennzeichnet, dass** ein erster SC-Verstärker als positiver verzögerter SC-Verstärker (8) realisiert sein kann und/oder zwei Eingänge mit je einem Faktor multipliziert und dass ein zweiter SC-Verstärker (10) als positiver verzögerter SC-Verstärker realisiert ist und/oder mindestens eines der Eingangssignale, vorzugsweise nicht verstärkt, um eine Halbperiode der Taktfrequenz verzögert sein kann.

5. Schaltung nach einem der Ansprüche 1 bis 4, **dadurch gekennzeichnet, dass** das SC-Netzwerk mindestens einen SC-Integrator (9) aufweist.

6. Schaltung nach einem der Ansprüche 1 bis 5, **dadurch gekennzeichnet, dass** der SC-Integrator (9) als negativer nicht verzögerter SC-Integrator realisiert ist und/oder eine Verstärkung von Eins aufweist und/oder verlustbehaftet ist und/oder dass der Ausgang des SC-Integrators (9) an einem zweiten Eingang des ersten SC-Verstärkers (8) anliegt und/oder dass mittels eines SC-Addierers (11) die Ausgänge des ersten SC-Verstärkers (8) und des zweiten SC-Verstärkers (10) addierbar sind.

7. Schaltung nach Anspruch 6, **dadurch gekennzeichnet, dass** der Ausgang des ersten SC-Verstärkers (8) an den Eingängen des SC-Integrators (9) und/oder des SC-Addierers (11) anliegt, wobei der Ausgang des zweiten SC-Verstärkers (10) an einem zweiten Eingang des SC-Addierers (11) anliegt.

8. Schaltung nach einem der Ansprüche 1 bis 3, **dadurch gekennzeichnet, dass** das SC-Netzwerk mindestens einen SC-Verstärker und/oder mindestens einen SC-Integrator und/oder mindestens einen SC-Addierer aufweist, wobei der erste und/oder der zweite SC-Verstärker und/oder der SC-Addierer negativ nicht verzögert realisiert ist, wobei der SC-Integrator positiv verzögert realisiert ist und wobei das Ausgangssignal (U) invertiert ist.

9. Schaltung nach einem der Ansprüche 1 bis 3, **dadurch gekennzeichnet, dass** das SC-Netzwerk mindestens einen SC-Verstärker (12) und/oder mindestens einen SC-Integrator (13) und/oder mindestens einen SC-Differenzverstärker (14) aufweist, wobei mindestens eines der vorzugsweise mit einem Faktor ($\gamma_1$, $\gamma_2$) multiplizierten Eingangssignale ($e_{pos}$, $e_{neg}$) im SC-Integrator (13) speicherbar ist, wobei ein weiterer Faktor ($\gamma_2$) von einer Kapazität des SC-Integrators (13) jeweils vom Ergebnis in jeder Taktperiode wieder löschbar ist, wobei ein SC-Verstärker (12) als positiver verzögerter SC-Verstärker realisiert ist und/oder mindestens eines der Eingangssignale nicht verstärkt und/oder um eine Halbperiode der Taktfrequenz verzögert, wobei der Ausgang des SC-Verstärkers (12) und des SC-Integrators (13) mittels des SC-Differenzverstärkers (14) subtrahierbar ist und/oder um eine Halbperiode der Taktfrequenz verzögerbar ist und wobei der Ausgang des SC-Verstärkers (12) am zweiten Eingang des SC-Integrators (13) anliegt.

10. Schaltung nach einem der Ansprüche 1 bis 9, **dadurch gekennzeichnet, dass** das Ausgangssignal (U) eine Verzögerung von einer Taktperiode aufweist.

**Claims**

1. A circuit for measuring distances travelled, having at least two inputs (1, 2), at least one measuring coil (3) and having at least one signal source, wherein at least two input signals ($e_{pos}$, $e_{neg}$) can be generated by means of the signal source, wherein the inputs (1, 2) are activatable by means of the input signals ($e_{pos}$, $e_{neg}$), wherein the input signals ($e_{pos}$, $e_{neg}$) are applied to the inputs of the measuring coil (3) and serve to generate a measuring signal and/or an output signal (U) dependent on the temperature influence, wherein the input signals ($e_{pos}$, $e_{neg}$) are applied to at least one clocked SC network, **characterised in that** the SC network comprises at least three SC units, two SC units (8, 10; 13, 12) being provided for processing the input signals ($e_{pos}$, $e_{neg}$) differently and one SC unit (11; 14) being provided for linking the outputs of the SC units (18, 10; 13, 12) by addition, multiplication or other operations.

2. A circuit according to claim 1, **characterised in that** the two input signals ($e_{pos}$, $e_{neg}$) are essentially unipolar and/or in phase opposition.

3. A circuit according to claim 1 or 2, **characterised in that** the input signals are filterable by means of at least one filter proportionately and/or by means of a high-pass filter.

4. A circuit according to any one of claims 1 to 3, **characterised in that** a first SC amplifier can be configured as a positive delayed SC amplifier (8) and/or multiplies two inputs with respectively one factor and **in that** a second SC amplifier (10) is configured as a positive delayed SC amplifier and/or at least one of the input signals, preferably not amplified, can be delayed by a half period of the clock frequency.

5. A circuit according to any one of claims 1 to 4, **characterised in that** the SC network comprises at least one SC integrator (9).

6. A circuit according to any one of claims 1 to 5, **characterised in that** the SC integrator (9) is configured as a negative, undelayed SC integrator and/or has an amplification of one and/or is lossy and/or **in that** the output of the SC integrator (9) is applied to a second input of the first SC amplifier (8) and/or **in that** the outputs of the first SC amplifier (8) and the second SC amplifier (10) can be added by means of an SC adder (11).

7. A circuit according to claim 6, **characterised in that** the output of the first SC amplifier (8) is applied to the inputs of the SC integrator (9) and/or of the SC adder (11), the output of the second SC amplifier (10) being applied to a second input of the SC adder (11).

8. A circuit according to any one of claims 1 to 3, **characterised in that** the SC network comprises at least one SC amplifier and/or at least one SC integrator and/or at least one SC adder, wherein the first and/or the second SC amplifier and/or the SC adder are configured as negative undelayed circuits, wherein the SC integrator is configured as a positive delayed circuit and wherein the output signal (U) is inverted.

9. A circuit according to any one of claims 1 to 3, **characterised in that** the SC network comprise at least one SC amplifier (12) and/or at least one SC integrator (13) and/or at least one SC differential amplifier (14), wherein at least one of the input signals ($e_{pos}$, $e_{neg}$), preferably multiplied by a factor ($\gamma_1$, $\gamma_2$), is storable in the SC integrator (13), wherein a further factor ($\gamma_2$) is erasable again by a capacitance of the SC integrator (13) in each case from the result in each clock period, wherein one SC amplifier (12) is configured as a positive delayed SC amplifier and/or does not amplify and/or delays by a half period of the clock frequency at least one of the input signals, wherein the output of the SC amplifier (12) and of the SC integrator (13) is subtractable by means of the SC differential amplifier (14) and/or can be delayed by a half period of the clock frequency and wherein the output of the SC amplifier (12) is applied to the second input of the SC integrator (13).

**10.** A circuit according to any one of claims 1 to 9, **characterised in that** the output signal (U) has a delay of one clock period.

**Revendications**

**1.** Circuit de mesure de distances, comprenant au moins deux entrées (1, 2), au moins une bobine de mesure (3) et au moins une source de signaux, dans lequel la source de signaux permet de produire au moins deux signaux d'entrée ($e_{pos}$, $e_{neg}$), dans lequel les entrées (1, 2) peuvent être excitées au moyen des signaux d'entrée ($e_{pos}$, $e_{neg}$), dans lequel les signaux d'entrée ($e_{pos}$, $e_{neg}$) sont présents aux entrées de la bobine de mesure (3) et servent à produire un signal de mesure et/ou un signal de sortie (U) dépendant de l'effet de température, dans lequel les signaux d'entrée ($e_{pos}$, $e_{neg}$) sont présents au niveau d'au moins un réseau SC cadencé, **caractérisé en ce que** le réseau SC présente au moins trois unités SC, dans lequel deux unités SC (8, 10 ; 13, 12) sont prévues pour un traitement différent des signaux d'entrée ($e_{pos}$, $e_{neg}$), et une unité SC (11 ; 14) est prévue pour associer les sorties des unités SC (8, 10 ; 13, 12) par addition, multiplication ou d'autres opérations.

**2.** Circuit selon la revendication 1, **caractérisé en ce que** les deux signaux d'entrée ($e_{pos}$, $e_{neg}$) sont substantiellement unipolaires et/ou en opposition de phase.

**3.** Circuit selon la revendication 1 ou 2, **caractérisé en ce que** les signaux d'entrée peuvent être filtrés de façon proportionnelle au moyen d'au moins un filtre et/ou peuvent être filtrés au moyen d'un filtre passe-haut.

**4.** Circuit selon l'une quelconque des revendications 1 à 3, **caractérisé en ce qu'**un premier amplificateur SC peut être réalisé comme un amplificateur SC temporisé positif (8) et/ou multiplie deux entrées respectivement par un facteur, et **en ce qu'**un deuxième amplificateur SC (10) est réalisé comme un amplificateur SC temporisé positif et/ou au moins l'un des signaux d'entrée, de préférence non amplifié, peut être temporisé d'une demi-période de la fréquence d'horloge.

**5.** Circuit selon l'une quelconque des revendications 1 à 4, **caractérisé en ce que** le réseau SC présente au moins un circuit d'intégration SC (9).

**6.** Circuit selon l'une quelconque des revendications 1 à 5, **caractérisé en ce que** le circuit d'intégration SC (9) est réalisé comme un circuit d'intégration SC non temporisé négatif et/ou présente un gain unitaire et/ou présente des pertes et/ou **en ce que** la sortie du circuit d'intégration SC (9) est présente au niveau d'une deuxième entrée du premier amplificateur SC (8) et/ou **en ce qu'**au moyen d'un additionneur SC (11), les sorties du premier amplificateur SC (8) et du deuxième amplificateur SC (10) peuvent être additionnées.

**7.** Circuit selon la revendication 6, **caractérisé en ce que** la sortie du premier amplificateur SC (8) est présente aux entrées du circuit d'intégration SC (9) et/ou de l'additionneur SC (11), dans lequel la sortie du deuxième amplificateur SC (10) est présente au niveau d'une deuxième entrée de l'additionneur SC (11).

**8.** Circuit selon l'une quelconque des revendications 1 à 3, **caractérisé en ce que** le réseau SC présente au moins un amplificateur SC et/ou au moins un circuit d'intégration SC et/ou au moins un additionneur SC, dans lequel le premier et/ou le deuxième amplificateur SC et/ou l'additionneur SC est/sont réalisé(s) pour être négatifs sans temporisation, dans lequel le circuit d'intégration SC est réalisé pour être positif avec temporisation, et dans lequel le signal de sortie (U) est inversé.

**9.** Circuit selon l'une quelconque des revendications 1 à 3, **caractérisé en ce que** le réseau SC présente au moins un amplificateur SC (12) et/ou au moins un circuit d'intégration SC (13) et/ou au moins un amplificateur différentiel SC (14), dans lequel au moins l'un des signaux d'entrée ($e_{pos}$, $e_{neg}$), de préférence multiplié par un facteur ($\gamma_1$, $\gamma_2$), peut être stocké dans le circuit d'intégration SC (13), dans lequel un facteur supplémentaire ($\gamma_2$) peut être supprimé de nouveau par un condensateur du circuit d'intégration SC (13), respectivement du résultat dans chaque période d'horloge, dans lequel un amplificateur SC (12) est réalisé comme un amplificateur SC temporisé positif et/ou au moins l'un des signaux d'entrée n'est pas amplifié et/ou est temporisé d'une demi-période de la fréquence d'horloge, dans lequel la sortie de l'amplificateur SC (12) et du circuit d'intégration SC (13) peut être soustraite au moyen de l'amplificateur différentiel SC (14) et/ou peut être temporisée d'une demi-période de la fréquence d'horloge, et dans lequel la sortie de l'amplificateur SC (12) est présente à la deuxième entrée du circuit d'intégration SC (13).

**10.** Circuit selon l'une quelconque des revendications 1 à 9, **caractérisé en ce que** le signal d'entrée (U) présente une temporisation d'une période d'horloge.

$e_{pos}$

2

6

$R_{11}$

$C_1$

$R_1$

$C_2$

$R_3$

U

3

$R_2$

$R_{12}$

$e_{neg}$

1

5

4

Fig. 1

EP 1 427 996 B1

12

Fig. 2

Fig. 3

Fig. 4

EP 1 427 996 B1

Fig. 5

Fig. 6

Fig. 7

18

Fig. 8

EP 1 427 996 B1

Fig. 9

EP 1 427 996 B1

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4225968 A1

- US 5589778 A